# EUROPEAN PATENT APPLICATION

(11) **EP 3 590 485 A1**
(43) Date of publication of application: **08.01.2020**
(21) Application number: 19189234.8
(22) Date of filing: 13.01.2015
(51) Int. Cl.: A61G 13/10, F16B 2/02, A61G 7/05, A61G 1/00, F16B 2/10

(54) **ACCESSORY CLAMP FOR EMERGENCY COTS**

(30) Priority: 13.01.2014 US 201461926856 P
(62) Divisional of application: 15701892.0
(71) Applicant: Ferno-Washington, Inc., Wilmington, OH 45177 (US)
(72) Inventor: CAMBRIDGE, Alan, Brendale, Queensland 4500 (AU); BROADLEY, Gavin, Brendale, Queensland 4500 (AU)
(74) Representative: Moore, Michael Richard

(57) **Abstract**

Provided is an accessory clamp for receiving and engaging a portion of a structural member of an emergency cot. The accessory clamp comprises a main body and a handle pivotally connected to the main body at a pivot point. The handle comprises a distal portion that is distal from the pivot point and is rotatable relative to the main body about the pivot point, the distal portion including a distal inner portion. When the handle is rotated into a locked position, the main body and the handle form a receiving area therewithin configured to receive and engage the portion of the structural member. Further, in the receiving area, the main body comprises a receiving surface and a side surface that are each configured to receive and engage the portion of the structural member.

## Description

### CROSS-REFERENCE TO RELATED APPLICATIONS

This application claims priority under 35 U.S.C. § 119(e) to U.S. Provisional Patent Application Serial No. 61/926856, filed on January 13, 2014, which is hereby incorporated by reference in its entirety.

### TECHNICAL FIELD

This application relates generally to accessory clamps for emergency cots and methods of use thereof.

### BACKGROUND AND SUMMARY

There has been a long felt need in the art for embodiments of clamps having a variety of uses for emergency cots, emergency vehicles, and associated emergency equipment. Disclosed herein are embodiments meeting such needs. Embodiments provided herein specifically address problems and solutions related to use of clamps to fixedly or removably attach to a variety of member portions.

For example, embodiments described herein disclose an accessory clamp for receiving and engaging a portion of a member comprising: a main body; a handle pivotally connected to the main body at a pivot point; the handle comprising a distal portion that is distal from the pivot point, the distal portion including a distal inner portion comprising a cam surface that extends outwardly from the distal inner portion; wherein: when the handle is rotated down into a locked position, the main body and the handle form a receiving area therewithin configured to receive and engage the portion of a member; and in the receiving area, the main body comprises a receiving surface and a side surface that are each configured to receive and engage the portion of the member.

In other examples, embodiments described herein disclose an accessory clamp for receiving and engaging a portion of a structural member, which comprises a main body having a receiving area therewithin configured to receive and engage the portion of the structural member, a bottom hook portion, and a screw clamp portion; and a handle pivotally connected to the main body at a pivot point. The structural member provides a bottom lip and an upper lip, the bottom hook portion engages the bottom lip; the screw clamp portion comprises a clamp and a screw that extends through the screw clamp portion which lifts the clamp to engage under the upper lip of the side frame rail, and in the receiving area, the main body comprises a receiving surface and a side surface that are each configured to receive and engage the portion of the structural member.

The structural member in any of the above embodiments can comprise at least a part of an emergency cot, an emergency vehicle, a wall structure, an emergency litter, an accessory bar, a shelving, or a rack.

In still other examples, embodiments described herein disclose a method of using an accessory clamp for receiving and engaging a portion of a member comprising: providing an accessory clamp for receiving and engaging the portion of a member comprising: a main body; a handle pivotally connected to the main body at a pivot point; the handle comprising a distal portion that is distal from the pivot point, the distal portion including a distal inner portion comprising a cam surface that extends outwardly from the distal inner portion; wherein: when the handle is rotated down into a locked position, the main body and the handle form a receiving area therewithin configured to receive and engage the portion of a member; and in the receiving area, the main body comprises a receiving surface and a side surface that are each configured to receive and engage the portion of the member; and engaging the portion of the member by rotating the handle down into the locked position.

These and other features and advantages of these and other various embodiments according to the present invention will become more apparent in view of the drawings, detailed description, and claims provided that follow hereafter.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
**FIG. 1** illustrates an isometric view of an accessory clamp according to an embodiment disclosed herein;
**FIG. 2** illustrates a side elevational view of the accessory clamp of **FIG. 1**;
**FIG. 3** illustrates an emergency cot to which an accessory clamp according to any of the embodiment disclosed herein may attach;
**FIG. 3A** is a close-up, section view of the emergency cot taken along Section A-A of **FIG. 3**, and which illustrates in cross section a side frame rail or frame rail of the emergency cot, with parts removed for ease of illustration and discussion, according to an embodiment herein to which an accessory clamp according to any of the embodiments disclosed herein may attach according to an embodiment herein;
**FIG. 4** illustrates an intravenous (IV) pole assembly which includes an accessory clamp according to an embodiment herein, showing a IV pole in an upright vertical position and depicting via dashed lines a folded down (stowed) position;
**FIG. 4A** is a section view of the intravenous (IV) pole assembly taken along Section A-A of **FIG. 4**;
**FIG. 4B** is a close-up, section view of the intravenous (IV) pole assembly taken along of Section B-B of **FIG. 4**;
**FIG. 4C** is a close-up, section view of the intravenous (IV) pole assembly taken along of Section C-C of **FIG. 4B**;
**FIG. 5** illustrates an isometric view of a tablet holder assembly which includes an accessory clamp according to an embodiment disclosed herein;
**FIG. 6** illustrates a partial isometric view of the tablet holder assembly of **FIG. 5**;
**FIG. 7** illustrates an isometric view of a gas tank holder assembly which includes an accessory clamp according to an embodiment disclosed herein;
**FIG. 8** illustrates a side elevational view of a gas tank holder assembly according to an embodiment disclosed herein;
**FIG. 9** illustrates an isometric view of a handle assembly which includes an accessory clamp according to an embodiment disclosed herein, wherein the handle assembly is disposed in a first position;
**FIG. 10** illustrates an isometric view of the handle assembly of **FIG. 9**, wherein the handle assembly is disposed in a second position;
**FIG. 11** illustrates an isometric view of a handle assembly of **FIG. 9**, wherein the handle assembly is disposed in a third position;
**FIG. 12** illustrates an isometric view of an emergency cot having the IV pole assembly of **FIG. 4**, the tablet holder assembly of **FIG. 5**, the gas tank holder assembly of **FIG. 7**, and the handle assembly of **FIG. 11**, all attached thereon according to an embodiment disclosed herein;
**FIG. 13** illustrates a side elevational view of a lateral extension assembly which includes an accessory clamp according to an embodiment disclosed herein and useable to attach a portion of a scoop stretcher to an emergency cot;
**FIG. 14** illustrates an isometric view of the lateral extension assembly of **FIG. 13** attached to a portion of a scoop stretcher according to an embodiment disclosed herein, wherein a stretcher holder of the lateral extension assembly is shown in an unlock position;
**FIG. 15** illustrates an isometric view of the lateral extension assembly of **FIG. 13** attached to the portion of a scoop stretcher depicted by **FIG. 14**, wherein the stretcher holder is shown in a lock position;
**FIG. 16** illustrates an isometric view of a scoop stretcher attached to an emergency cot using one or more lateral extension assemblies of **FIG. 14**, and have attached thereto on an accessory bar that is coupled between the halves of the scoop stretcher is the IV pole assembly of **FIG. 4**;
**FIG. 17** illustrates a side elevational view of the emergency cot of **FIG. 16** showing attached thereto the scoop stretcher via the one or more lateral extension assemblies of **FIG. 14** and also showing attached to the scoop stretcher the IV pole assembly of **FIG. 4**;
**FIG. 18** illustrates an isometric view of a platform assembly which includes an accessory clamp according to an embodiment disclosed herein;
**FIG. 19** illustrates an isometric view of the platform assembly of **FIG. 18** as well as the gas tank holder assembly of **FIG. 8**, shown in partial isometric view, attached to a frame rail of an emergency cot;
**FIG. 20** illustrates a side elevational view of a side panel assembly which includes an accessory clamp according to an embodiment disclosed herein, wherein a side panel of the side panel assembly is in a first vertical (up) position;
**FIG. 21** illustrates a side elevational view of the side panel assembly of **FIG. 20**, wherein the side panel is in a second vertical (down) position;
**FIG. 22** illustrates a back isometric view of the side panel assembly of **FIG. 20**, wherein the side panel is in a third angled position;
**FIG. 23** illustrates an isometric view of an emergency cot having first and second side panel assemblies each according to the embodiment depicted by **FIG. 20**, the IV pole assembly of **FIG. 4**, the gas tank holder assembly of **FIG. 5**, and the platform assembly of **FIG. 18**, all attached to the side frame of an emergency cot;
**FIG. 24** illustrate a back side isometric view of another cot side panel assembly which includes an accessory clamp according to an embodiment herein, wherein a side panel of the cot side panel assembly is depicted in a vertical (up) position;
**FIG. 25** illustrate an isometric view of the cot side panel assembly of **FIG. 24**, wherein the side panel is depicted in a horizontal position;
**FIG. 26** illustrate a side elevational view of the cot side panel assembly of **FIG. 24**, wherein the side panel is depicted in an angled position;
**FIG. 27** illustrate a side elevational view of the cot side panel assembly of **FIG. 24**, wherein the side panel is depicted in another angled position;
**FIG. 28** illustrate a side elevational view of the cot side panel assembly of **FIG. 24**, wherein the side panel is depicted in the horizontal position, and being positionable in a folded down position that is indicated via dashed lines;
**FIG. 29** illustrates an isometric view of an emergency cot having first and second cot side panel assemblies each according to the embodiment depicted by **FIG. 24**, the IV pole assembly of **FIG. 4**, the gas tank holder assembly of **FIG. 5**, the handle assembly of **FIG. 11**, and the platform assembly of **FIG. 18**, all attached to the side frame of an emergency cot;
**FIG. 30** illustrates an isometric view of a side arm assembly which includes an accessory clamp according to an embodiment herein, wherein the side arm assembly is in a support position;
**FIG. 31** illustrates an isometric view of the side arm assembly of **FIG. 30**, wherein the side arm assembly is in a store position;
**FIG. 32** illustrates a side elevational view of first and second support arm assembly each according to the embodiment of **FIG. 30** and depicted attached to respective sides of an emergency cot;
**FIG. 33** illustrates an side view of an handle assembly which includes an accessory clamp according to an embodiment herein and shown coupled to the side frame rail or frame rail of **FIG. 3A**; and
**FIG. 34** illustrates a top view of the handle assembly of **FIG. 33**.

### DETAILED DESCRIPTION

Some embodiments of the present disclosure will now be described. The invention may, however, be embodied in different forms and should not be construed as limited to the embodiments set forth herein. Rather, these embodiments are provided so that this disclosure will be thorough and complete, and will provide illustrative embodiments.

Skilled artisans appreciate that elements in the figures are illustrated for simplicity and clarity and have not necessarily been drawn to scale. For example, the dimensions of some of the elements in the figures may be exaggerated relative to other elements, as well as parts removed to help to improve understanding of the various embodiments of the present invention. In addition, unless otherwise defined, all technical and scientific terms used herein have the same meaning as commonly understood by one of ordinary skill in the art to which embodiments of this invention belong. The terminology used herein is for describing particular embodiments only and is not intended to be limiting of the invention. As used in the specification and appended claims, the singular forms "a," "an," and "the" are intended to include the plural forms as well, unless the context clearly indicates otherwise.

Unless otherwise indicated, all numbers expressing quantities as used in the specification and claims are to be understood as being modified in all instances by the term "about," which is intended to mean up to ±10% of an indicated value. Additionally, the disclosure of any ranges in the specification and claims are to be understood as including the range itself and also anything subsumed therein, as well as endpoints. Unless otherwise indicated, the numerical properties set forth in the specification and claims are approximations that may vary depending on the desired properties sought to be obtained in embodiments of the present invention. Notwithstanding that numerical ranges and parameters setting forth the broad scope of embodiments of the invention are approximations, the numerical values set forth in the specific examples are reported as precisely as possible. Any numerical values, however, inherently contain certain errors necessarily resulting from error found in their respective measurements.

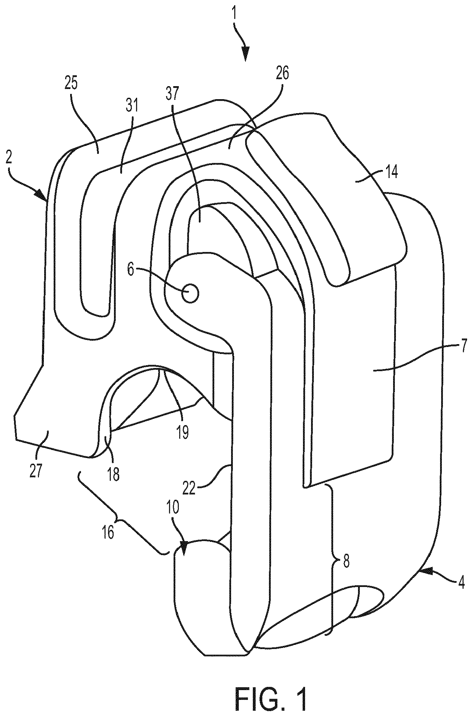

Referring to **FIGS. 1-2**, an embodiment of an accessory clamp 1 is shown that detachably connects to a variety of objects such as, for example, an emergency cot, emergency vehicle, wall structure, emergency litter, shelving, rack, or the like. Emergency vehicles, as used herein, may include ambulances, helicopters, fire trucks, military rescue vehicles, or the like. The accessory clamp 1 generally is configured to connect to a member that is correspondingly shaped such that the clamp 1 engages and clamps onto the member. In certain embodiments, as will be shown and described herein, the member is a frame rail of an emergency cot.

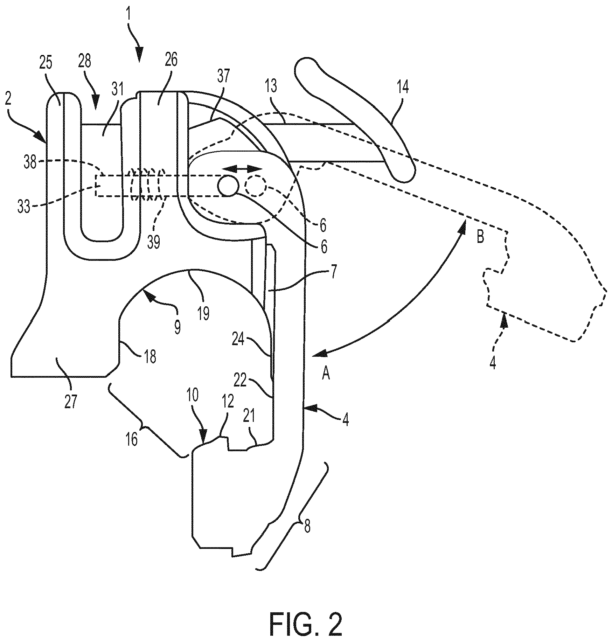

The accessory clamp 1 generally includes a main body 2 and a handle 4 pivotally connected to the main body 2 at a pivot point 6 such that the handle 4 may pivot and/or rotate about the pivot point relative to the main body 2. The pivot point 6 may be a joint or axle that permits the handle 4 to pivot about a single axis of the joint in a direction as indicated by directional arrow A and/or in the opposite direction as indicated by directional arrow B shown in **FIG. 2**. The handle 4 includes a distal portion 8 as also shown in **FIG. 2** that is distal from the pivot point 6. As depicted, the handle 4 is generally U-shaped, wherein the distal portion 8 forms the bottom portion of the U-shape. An outer body portion 7 of the main body 2 has a complimentary shape to the interior of the U- shaped handle 4 such that outer body portion 7 is surrounded by the handle 4, which can be rotated relative thereto. The distal portion 8 includes a distal inner portion 10 that may include a cam surface 12 that extends outwardly from the distal inner portion 10. In this embodiment, an optional hook (or connecting handle) 14 is connected to and extending from the main body 2, adjacent the outer body portion 7 thereof, by a connecting post 13, thereby enabling personnel to hang articles from the hook 14. Illustrative articles may include, but not be limited to IV bags, bags (e.g., purses, computer bags, medical bags, etc.), cords (e.g., electric cords, communication cords/fibers, etc.), lights, equipment, or the like. In other embodiments as shown and described below herein, the accessory clamp 1 may not include the hook 14 and connecting post 13.

When the handle 4 is rotated in direction A (i.e., from an unlocked position resulting from being previously rotated in the direction B) into the down position (e.g., "locked") position, the main body 2 and the handle 4 form a receiving area 16 there within. It is to be appreciated that the receiving area 16 is configured and/or operable to receive and engage at least a portion of a member of any one of the above mentioned variety of objects which has a complimentary shape.

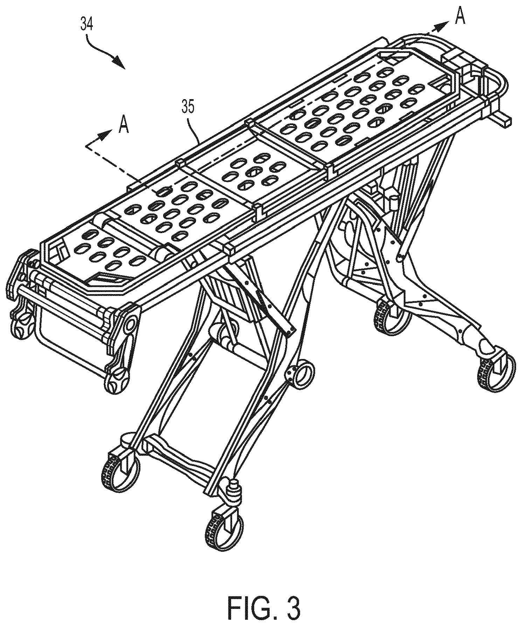

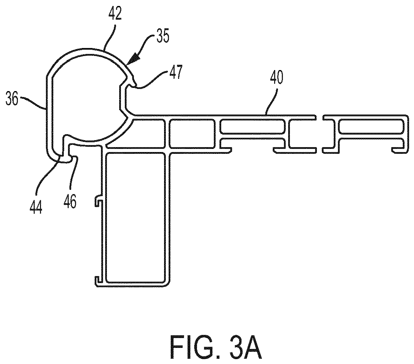

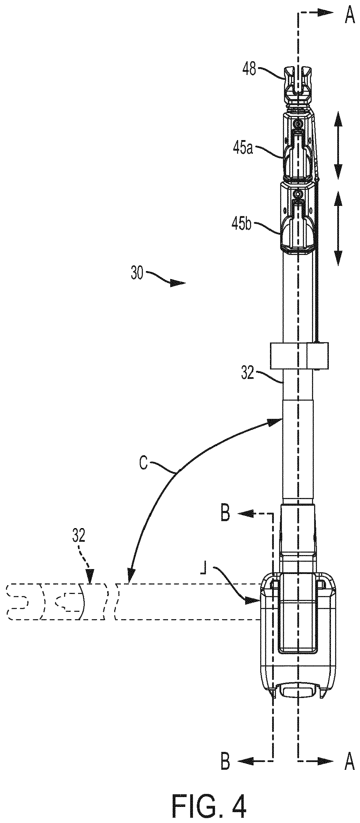

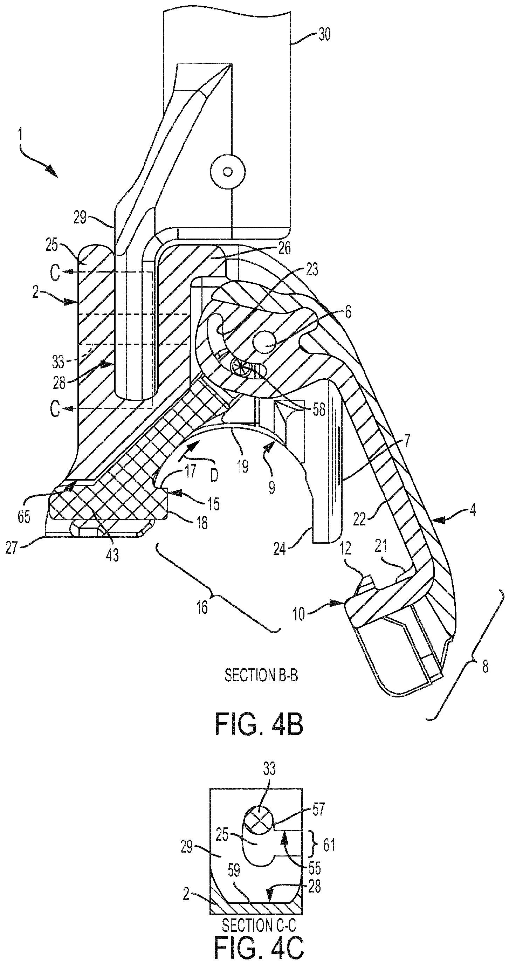

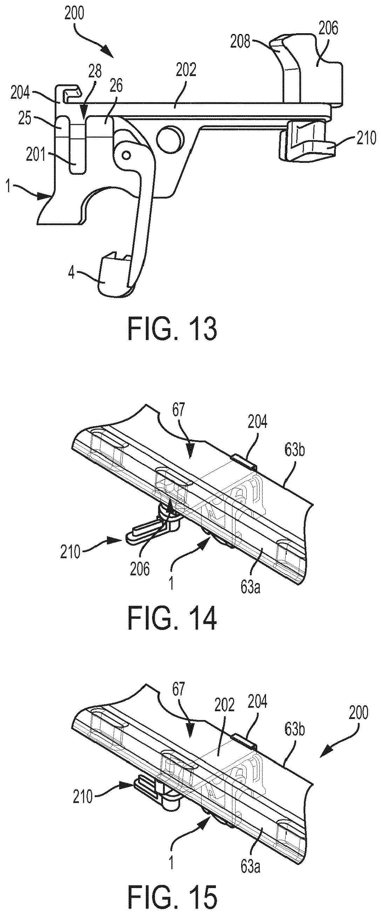

For example, **FIG. 3** illustrates an emergency cot 34 to which the accessory clamp 1 is configured to engage a side frame rail 35 thereof. As depicted by **FIG. 3A**, which illustrates a cross-section of the emergency cot 34 taken along Section A-A of **FIG. 3**, with parts removed for ease of illustration and discussion, the side frame rail 35 of the emergency cot 34 provides such a complimentary shape to the receiving area 16 of the clamp 1. In particular, the receiving area 16 as defined by an interior side of the main body 2 includes a linear side surface 18 that is contiguous with a receiving surface 19, which is contiguous with an inner surface 24 (best shown by **FIG. 4B**) of the outer body portion 7. Each surfaces 18, 19, 24 is configured to receive and engage a portion of such a member such as, for example, the side frame rail 35 shown in **FIG. 3A** (as well as shown in **FIGS. 13**, **17**, **19**, **23**, **29** and **32**).

With reference to **FIGS. 2** and **3A**, in the illustrated embodiments, the side surface 18 and inner surface 24 each have a linear shape and the receiving surface 19 has a concave curvature or radius of curvature. In other embodiments, other shapes to these surfaces 18, 19, 24 may be provided as long as such permit firm attachment to a complimentary member, such as side frame rail 35. In this illustrated embodiment, the receiving surface 19 is curved to substantially match the curvature of an upper portion 42 of the side frame rail 35, and the side surface 18 and inner surface 24 are shaped to substantially match the linear portion 36 of the side frame rail 35. As shown by the illustrated embodiment **FIG. 3A**, the side frame rail 35 is provided integral with a frame section 40 of an emergency cot 34 as one example of a member that is correspondingly shaped such that the clamp 1 engages and clamps onto the member. In other embodiments, it is to be appreciated that the corresponding or complimentary shaped depicted by side frame rail 35 may likewise be provided to a structural member of any of the above mentioned variety of objects such that the accessory clamp 1 may detachably connect thereto.

In the illustrated embodiment of **FIG. 2**, when the handle 4 is rotated in the direction B, that the clamp 1 is placed in an open position, which is indicated by the handle 4 being shown in dashed lines. While in this open position, the clamp 1 can be brought into contact with the side frame rail 35 (**FIG. 3**), such that the side frame rail 35 is engaged in the receiving area 16. Specifically, the linear side surface 18 engages under (adjacently) an upper lip 47 of the side frame rail 35, the receiving surface 19 engages the upper portion 42, and the inner surface 24 engages the corresponding linear portion 36 of the side frame rail 35. Once in position, the handle 4 is rotated in the direction A (**FIG. 2**) until cam surface 12 engages a lower surface 44 of the side frame rail 35 and then snaps past and engages a lip 46 of the side frame rail 35, locking, securing, and/or holding the clamp 1 onto the side frame rail 35, wherein a hump portion 21 and an interior surface 22 (**FIG. 2**) of the handle 4 also engages the lower surface 44 and the corresponding linear portion 36 of the side frame rail 35, respectively.

In some embodiments, such as depicted best by **FIG. 4B**, the linear side surface 18 may be provided as an end surface to a protrusion 15 that extends inwardly and/or radially inwardly from the receiving surface 19 as shown. When the clamp 1 is first brought into contact with the side frame rail 35 (**FIG. 3**), the linear side surface 18 of the protrusion contacts the underneath the upper lip 47 of the side frame rail 35. In this manner and in this embodiment, with the linear side surface 18 engaged to the side frame rail 35 under the upper lip 47, a side surface 17 (which is contiguous with linear side surface 18) of the protrusion 15 engages the upper lip 47, and then the receiving surface 19 and inner surface 24 engage the upper portion 42 and the corresponding linear portion 36, respectively. In this embodiment, once the clamp 1 is positioned as mentioned above on the side frame rail 35, the handle 4 is then rotated in the direction A (**FIG. 2**) until cam surface 12 engages a lower surface 44 of the side frame rail 35 and then snaps past and engages a lip 46 of the side frame rail 35, locking, securing, and/or holding the clamp 1 onto the side frame rail 35, wherein the hump portion 21 and the interior surface 22 of the handle 4 also engages the lower surface 44 and the corresponding linear portion 36 of the side frame rail 35, respectively. In some embodiment, the receiving surface 19 may be configured and/or shaped to partially, substantially, or completely match and/or correspond with the shape, profile, or design of the member it will be engaging such as, for example, the side frame rail 35.

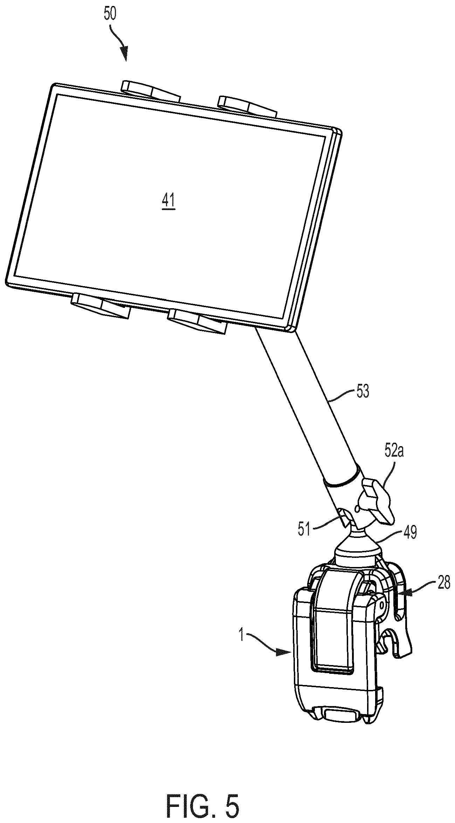

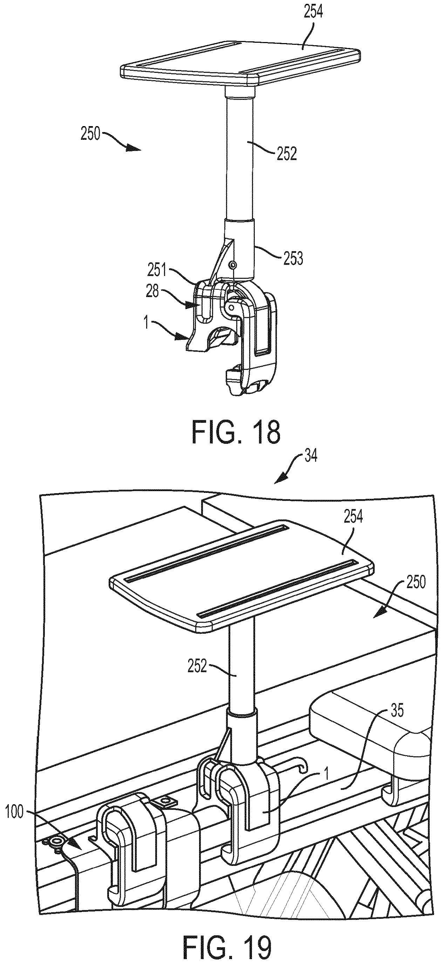

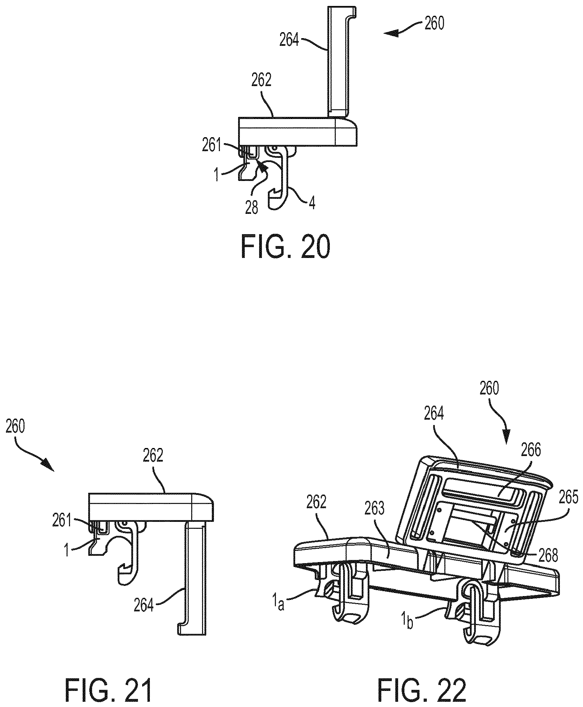

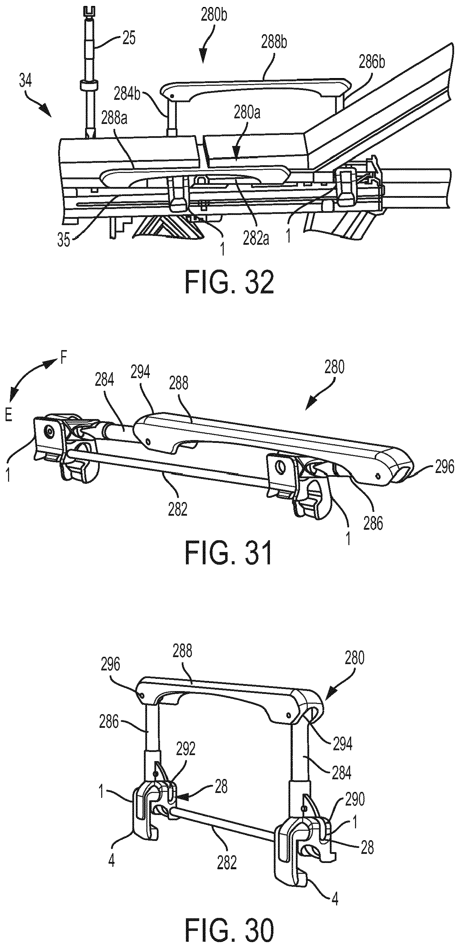

Referring back to **FIGS. 1** and **2**, the main body 2 of the accessory clamp 1 has inner body portion 25, a middle body portion 26 defined between the outer body portion 7 and inner body portion 25, and a bottom body portion 27. An interior surface 9 (**FIG. 2**) defined by the outer body portion 7, the middle body portion 26, and the bottom body portion 27 provides the inner surface 24, the receiving surface 19, and the side surface 18, respectively. The main body 2 between the inner body portion 25 and the middle body portion 26 defines an attachment space 28. The attachment space 28 is shaped and configured to receive therein a connection end such as, for example, a connection end 29 of IV pole assembly 30 (**FIG. 4B**), a connection end 49 of a tablet holder assembly 50 (**FIG. 5**), a connection end 201 of a lateral extension assembly 200 (**FIG. 13**), a connection end 251 of a platform assembly (**FIG. 18**), a connection end 261 of a side panel assembly (**FIG. 20**), connection end (or support joint) 290 or 292 of the side arm assembly (**FIG. 30**). In the illustrated embodiment of **FIGS. 1** and **2**, a blank 31 may be provided in the attachment space 28 when a connection end 29, 49, 201, 251, 261, 290 or 292 has not been received therein to fill the space. In such embodiment, the blank 31 may be removed (as when as any connection end provided therein) by rotating the handle 4 to position B such that a pin 33 is moved from a cavity 38 provided in the blank 31 (or connection end) as depicted in dash lines in **FIG. 2**. It is to be appreciated that a nose section 37 of the handle 4 abuts against the middle body portion 26 when the handle 4 is moved to position B, which causes the pivot point 6 to move outward or away from the middle body portion 26 (as shown in dashed lines) and correspondingly pulls the pin 33 attached thereto from the cavity 38, such that the blank 31 (or connecting end) may be removed from the attachment space 28. Moving the handle 4 back to position A, decompresses a spring 39 (shown in dashed lines) that in this embodiment is attached to the pin 33 inside of the main body 2, thereby moving the pivot point 6 back closer to the middle body portion 26, and extending the pin 33 from the inside of the main body 2 and into the attachment space 28. In the embodiment such described above, it is to be appreciated that the hook 14 may be removable from the main body (e.g., via pulling out, unscrewing, etc.). In still other embodiments, the hook 14 being optional is not provided. In still other embodiment, the hook 14 and the blank 31 are not removable, but rather are integral members of the main body 2, wherein there is no attachment space 28 provided. In still other embodiments, any or all of the herein disclosed connection ends 29, 49, 201, 251, 261, 290 or 292 may also be connected permanently within the attachment space 28 via the pin 33, wherein the pin 33 is fixed to/into the main body 2 and is not intended to be easily removed. In still other embodiments, the pin 33 is fixed to/into the main body 2 and does not move, but any or all of the connection ends 29, 49, 201, 251, 261, 290 or 292 may be provided with a key-hole shape that is described hereinafter in a later section with reference to **FIG. 4C**, which can releasable engage the pin 33 within the attachment space 28 when insert therein in a particular attachment direction, and held releasable therein until removed in a direction oppose of the particular attachment direction.

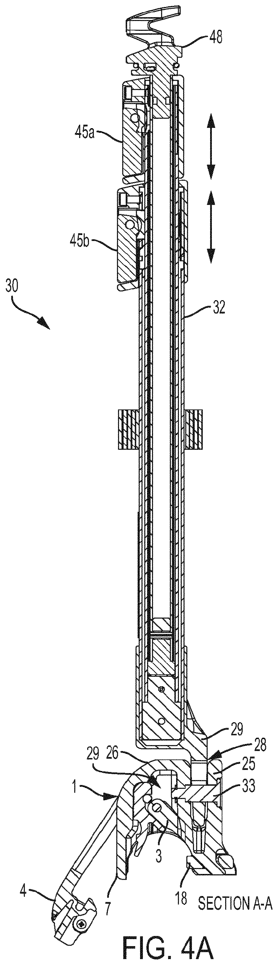

Referring now to **FIGS. 4**, **4A** and **4B**, as like parts are indicated with like symbols, only the varying aspects of the embodiment of the clamp 1 depicted in **FIGS. 4**, **4A** and **4B** from the embodiments of the accessory clamp 1 discussed above with reference to **FIGS. 1** and 2 are discussed hereafter. **FIG. 4** illustrates an intravenous (IV) pole assembly 30 which includes an accessory clamp 1 coupled to an IV pole 32. In the illustrative embodiment, the IV pole 32 has a three stage design with adjustable height, via a pair of height adjusters 45a, 45b, for placement of one or more IV bags/containers at appropriate levels. An IV bag hook 48 is also provided at a remote end of the IV pole 32 to hold the one or more IV bags/containers thereon. The IV bag hook 48 may be removable such that other types of hooks or holding accessories of different designs may be inserted into the remote end and held thereon. The IV pole 32 may be folded down relative to the clamp 1 as indicated by arrow C, e.g., to be parallel with the side frame rail 35(**FIG. 3**), and thus moved out of the way when not in use. Although the IV pole 32 may be permanently mounted to the clamp 1 in an embodiment, it is to be appreciated that in the illustrated embodiment the IV pole 32 is removably attached to the clamp 1 via the connection end 29 being removable retained in the attachment space 28 as best depicted by FIG. 4A.

With reference to **FIGS. 4A**, **4B** and **4C**, depicting an expanded illustration of Sections A-A, B-B and C-C of **FIG. 4**, respectively, and wherein the clamp 1 is depicted in an open position (i.e., not in position A), the IV pole 32 is detachably coupled to the clamp 1 due to the pin 33 being accommodated in a key-hole slot 55 (**FIG. 4C**) provided in the connection end 29 of the IV pole 32. Due to the shape of the key-hole slot 55, the connection end 29 is able to retain the pin 33 therein when the IV pole is rotated in the direction C (**FIG. 4**). When the IV pole 32 is positioned in the depicted upright position of **FIG. 4**, the pin 33 is retained in a similarly shaped upper portion 57 of the key-hole slot 55, wherein a bottom portion 59 of the connection end 29 having a complimentary shape to the attachment space 28 additionally helps to position and hold the IV pole 32 in the upright position. To remove the IV pole 32 from the clamp 1, the IV pole 32 is lifted in the vertical direction such that the bottom portion 59 is no longer resting on the bottom of the attachment space 28 having the complimentary shape and such that the pin 33 is no longer accommodated within the shaped upper portion 57 of the key-hole slot 55, and then rotated in a direction opposite to direction C, such that the pin 33 aligns with an opening 61 of the key-hole slot 55. With the pin 33 aligned with the opening 61, the connection end 29 can then be lifted and removed from the attachment space 28. In still other embodiments, it is to be appreciated that other types of coupling mechanisms known in the art, such as bayonet connection, screw connection, etc., can be used to removable lock the IV pole 32 into the attachment space 28.

It is to be appreciated that before or after the accessory clamp 1 is attached to a member, such as the side frame rail 35 of the emergency cot 34 as described herein, the connection end 29 can be conveniently connected or unconnected from the attachment space 28 of the clamp 1, thereby providing flexibility as to the placement of the clamp 1 on a member, such as to the side frame rail 35, as well as flexibility as to the type of accessory, i.e., having a connection end provided with a key-hole slot and shaped similarly to connection end 29, to insert and be retained in the attachment space 28 of the clamp 1. Having an accessory clamp 1 which can detachably couple thereto multiple types of accessories also reduces the number of clamps needed to be attached to a member, such as side frame rail 35, thereby reducing cost in purchasing and replacement such accessories, as well as reduces the time and need to move each clamp 1 provided on the member, such as side frame rail 35, when an accessory needs to be changed/swapped out.

With reference to **FIG. 4B**, in addition to the snap fit between cam surface 12 and lip 46 discussed previously above in earlier sections, in this embodiment additional holding tension is provided to the engagement between the side surface 17 of the protrusion 15 and the upper lip 47, via a cam channel 23 provided in the handle 4. A tensioning arm 43 is slidably housed within a cavity 65 that is provided in the main body 2 below an attachment space 28 and in the bottom body portion 27 of the main body 2. The tensioning arm 43 in this embodiment provides the protrusion 15 with side surface 17 and has an integral cam follower 58 that is slidably accommodated in the cam channel 23. As the handle 4 is moved from unlocked position B to locked position A, the shape of the cam channel 23 causes the cam follower 58 to move in direction D, drawing the side surface 17 of the tensioning arm 43 into tighter/closer engagement with the upper lip 47, thereby providing the additional holding tension to the engagement between the clamp 1 and the side frame rail 35. Conversely, moving handle 4 from the locked position A to unlocked position B, the shape of the cam channel 23 causes the cam follower 58 to move in a direction opposite to direction D, drawing the side surface 17 of the tensioning arm 43 away from the tighter/closer engagement with the upper lip 47, thereby removing the additional holding tension to the engagement between the clamp 1 and the side frame rail 35.

Referring now to **FIGS. 5-6**, a tablet holder assembly 50 for a portable computer tablet 41 (e.g., Apple iPad®, Samsung Galaxy Tab®, Dell Ultrabook®, or any other computer tablet) is shown. The tablet holder assembly 50 includes the clamp 1, a connection end 49 which provides a first ball joint 51, a rod 53 movably connected to the ball joint 51, a second ball joint 54 connected to an end of the rod 53 opposite the first ball joint 51, and a tablet holder 56 movably connected to the second ball joint 54. As the clamp 1 may be according to any of the embodiments described above in the previous sections made in reference to **FIGS. 1-4****,** for purposes of brevity no further discussion is provided thereon. Additionally, as the manner in which the connection end 49 is retained (releasably or fixed) in the attachment space 28 is the same as connection end 29 and thus may be according to any of the embodiments described above in the previous sections made in reference to **FIGS. 1-4**, for purposes of brevity no further discussion is provided thereon.

In the illustrated embodiment, the first and second ball joints 51 and 54 enable the rod 53 and tablet holder 56, respectively, to move in multiple axis directions. The ball joints 51, 54 may be any number of (conventional or unknown) multiple axis joints and/or ball joints. Additionally, the first ball joint 51 may also include a first positional lock 52a, and the second ball joint 54 may also include a second positional lock 52b. A user may unlock the first positional lock 52a to enable the user to move the rod 53 in multiple directions until the rod 53 is in a desired position and/or orientation. Once in the desired location and/or orientation, the user may lock the first positional lock 52a, thus locking the rod in a certain orientation and/or position. Similarly, the user may unlock the second positional lock 52b to enable the user to move the tablet holder 56 in multiple directions until the tablet holder 56 is in a desired position and/or orientation. Once in the desired location and/or orientation, the user may lock the second positional lock 52b, thus locking the tablet holder 56 in a certain orientation and/or position. Although in this embodiment, the tablet holder assembly 50 is shown, including the first and second ball joints 51, 54, respectively, it is understood that other connections may be used between the connection end 49 and the rod 53, and the rod 53 and the tablet holder 56, including, but not limited to integral connections, fixed connections, joints permitting single axis movement, joints permitting dual axes movement, or other joints permitting multiple axes movement.

The tablet holder 56 includes a holder body 60, a first extension 62 extending from the holder body 60, a second extension 64 spaced apart from the first extension and extending from the holder body 60, a third extension 66 extending from an end of the holder body 60 opposite the first extension 62, and a fourth extension 68 spaced from the third extension and extending from an end of the holder body 60 opposite the second extension. This illustrative embodiment provides four points of engagement with the tablet 41 when the tablet is positioned on and within the four extensions such that the tablet holder 56 holds the tablet. It is understood that the tablet holder 56 may include one or more extensions that may extend at a variety of angles from the holder body 60 for any amount of length from the holder body 60. The one or more extensions may also include protrusions or clips that extend inwardly from an inner surface of one or more of the extensions such that the protrusion or clip snaps over the front surface of the tablet, holding the tablet onto the tablet holder 56. In one embodiment, a first extension extends from one end of the holder body 60 and two additional extensions extend parallel two each other from an end of the holder body 60 opposite the first extension, providing 3 points of engagement. In any of the embodiments, the one or more extensions opposed from each other on the base may be spaced apart such that the extensions may receive a tablet there between in a frictional engagement. Other conventional or yet-to-be developed fastening or connection devices and/or methods may be used to connect the tablet to the tablet holder 56 such as, for example, channels that one or more of the edges of the tablet would fit within, screws, bolts, straps, snap-fit connections, etc.

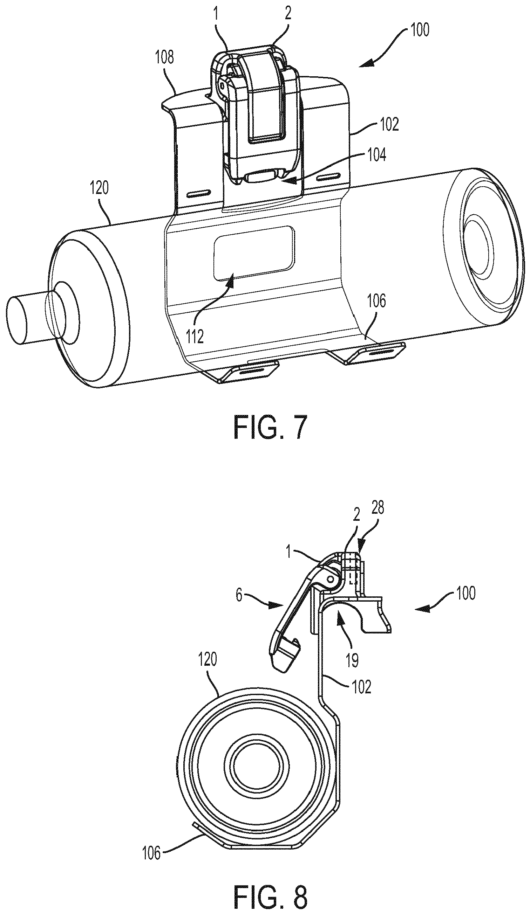

Referring to **FIGS. 7-8**, a gas tank holder assembly 100 for a gas tank 120 is shown. The gas tank holder assembly 100 includes the clamp 1 and gas tank holder body 102. As the clamp 1 may be according to any of the embodiments described above in the previous sections made in reference to **FIGS. 1-4**, for purposes of brevity no further discussion is provided thereon except for noted differences between embodiments. In the illustrated of **FIGS. 7** and **8**, the main body 2 of the clamp 1 is integral fixedly with the gas tank holder body 102. However, in other embodiments, the gas tank holder body 102 may be removably connected to the clamp 1 via having an integral body portion similar to blank 31 (**FIG. 2**) which would attached within attachment space 28 as depicted in dashed lines in **FIG. 8**. As the manner in which the gas tank holder body 102, if provided with such a body portion similar to blank 31, would be retained releasably in the attachment space 28 is the same as blank 31 as described above in the previous sections made in reference to **FIGS. 1-2**, for purposes of brevity no further discussion is provided thereon. The gas tank holder body 102 may include a cradle portion 106 that is configured to hold and/or cradle a gas tank 120. The gas tank 120 is shown transparent for ease of viewing the holder body 102 and cradle and illustration purposes only. The holder body 102 may further include a first opening 104 disposed therein that is configured to receive the clamp 1 therein. The holder body 102 may also include a second opening 112 disposed therein. The holder body 102 may include an upper lip portion 108 that extends from an upper end of the holder body 102 in a direction away from the gas tank 120 which engages, e.g., with additional portions of the side frame rail 35 that are adjacent to the clamp 1 to provide additional stability and weight distribution. Although not shown, the holder body 102 and/or the cradle portion 106 may include straps, bands and/or other fastening devices to hold, secure, and/or tighten the tank to the cradle portion 106 and/or the holder body 102. In other embodiments, the cradle portion 106 is curved such that its curvature extends sufficiently around the body of the gas tank 120 that it secures and/or holds the gas tank 120 in its position within the cradle portion 106.

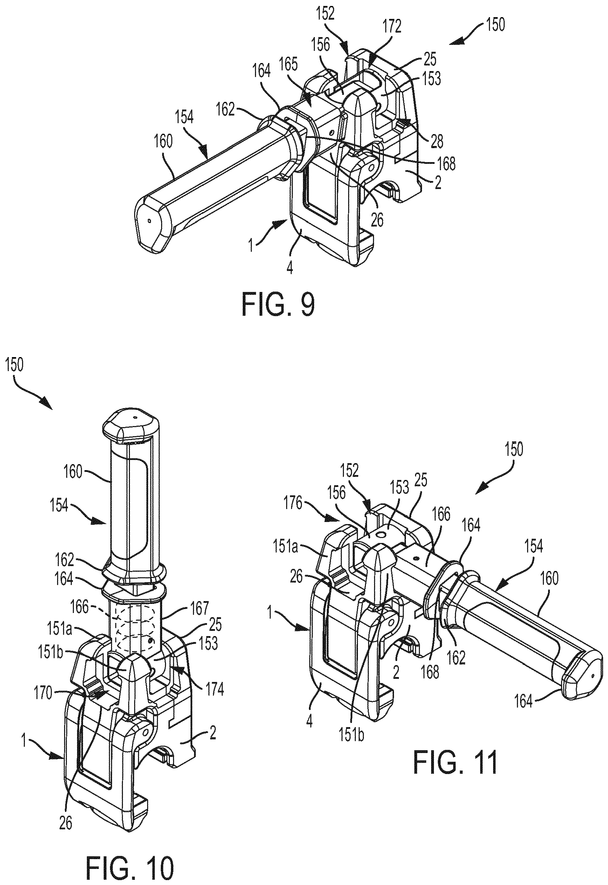

Referring to **FIGS. 9-11**, a handle assembly 150, which includes the clamp 1 and a handle , is shown. As the clamp 1 and the operation thereof may be according to any of the embodiments described above in the previous sections made in reference to **FIGS. 1-8**, for purposes of brevity no further discussion is provided thereon except for the noted differences between embodiments. In the illustrated of **FIGS. 9-11**, the inner body portion 25 and the middle body portion 26 of the main body 2 of the clamp 1 are extended upwards in order to provide a larger and deeper attachment space 28 as compared to the attachment spaces in the previous embodiments. Additionally, as depicted, the middle body portion 26 provides a pair of spaced apart and identically shaped pillars 151a and 151b (**FIG. 10**), which extend upward such that tops of the inner body portion 25 and the pillars 151a, 151b have the same height in the illustrated embodiment. In other embodiments, the height of the pillars 151a, 151b may smaller then the height of the inner body portion 25. The inner body portion 25 and the pillars 151a, 151b of the middle body portion 26 together form a joint body 152. A handle body 154 is movably or pivotally connected to the joint body 152. The handle body 154 may also include a joint feature 156 at one end of the handle body 154 that is received within a joint receiver 153 that is provided in the attachment space 28 and which permits the handle body 154 to move or pivot within and relative to the joint body 152 about one or more axes. As shown in this embodiment, the handle body 154 is movably relative to the joint body 152 into between one and four positions: a first position shown in **FIG. 9**; a second position shown in **FIG. 10**; a third position shown in **FIG. 11**; and a fourth position (not shown) which is the position wherein the handle body 154 is disposed in a 180 degree orientation from the third position shown in **FIG. 11**.

As the attachment space 28 and the spaced apart pillars 151a, 151b define a pair of channels perpendicular to each other in the main body 2, it can also be said that the joint body 152 has disposed therein one or more of: a first aperture 170 (**FIG. 10**) defined between the pillars 151a, 151b, a second aperture 172 (**FIG. 9**) extending vertically (i.e., perpendicular to the bottom thereof) into/out of the attachment space 28, and third and fourth apertures 174, 176 (**FIGS. 10 and 11**, respectively) extending horizontally (i.e., parallel to the bottom thereof) the right and left side ends of the attachment space 28, and which define the first position, second position, third position, and fourth position, respectively. Accordingly, various embodiments can be provided with a varying number of apertures in order to provide a specific number of positions in which the handle body 154 may be moved between. For example, in some embodiments the handle body 154 is moveable into the first position wherein the joint body 152 has exactly one aperture 170. In other embodiments the handle body 154 is moveable into the first position and the second position wherein the joint body 152 has exactly the two apertures 170 and 172. In still other embodiments the handle body 154 is moveable into the first position, the second position and the third position wherein the joint body 152 has exactly the three apertures 170, 172, and 174. In yet other embodiments the handle body 154 is moveable into the first position, the second position, the third position and the fourth position wherein the joint body 152 has exactly the four apertures 170, 172, 174, and 176 as depicted in the illustrated embodiment.

The handle body 154 may include a gripping feature 160 that is positioned at an end of the handle body 154 that is opposite the joint feature 156. The gripping feature 160 could be just the handle body 154 itself with no other additional features or the gripping feature 160 could include additional features that assist a user in gripping the gripping feature such as, for example, a first flange end 162 and a second flange end 164. In other embodiments, the gripping feature 160 may further include a resilient material (e.g., elastomeric material) coated onto or fabricated into a sleeve that is inserted over the gripping feature 160. In yet another embodiment, the gripping feature 160 itself could be fabricated from a resilient material (e.g., elastomeric). It is understood that any and all of the components of the handle assembly 150 may be fabricated from metals, plastics, composites, and/or any combination thereof.

In this embodiment, the handle body 154 has a first cross sectional width (w) (e.g., a linear width or diameter). The handle body 154 also includes a locking mechanism 165 (**FIG. 9**) that is configured and/or operable to lock the handle body 154 into a fixed position when it is in one of the four positions set forth above. The locking mechanism 165 is operable to unlock the handle body 154 from its current position and permit it to be moved by a user to another position such as, for example, to one of the other three positions or any position there between. Once in the first position, second position, third position, or fourth position, the locking mechanism 165 locks, secures, and/or holds the handle body 154 into that position.

In the embodiment shown in **FIGS. 9-11**, the locking mechanism 165 comprises a tube 166 (**FIGS. 10 and 11**) that slideably engages the handle body 154 adjacent the joint feature 156. In one example, the tube 166 includes a bore 168 that has a cross sectional width that is larger than the cross sectional width (w) of the handle body such that the tube 166 slides back and forth along at least a portion of the handle body 154. In one embodiment, the tube 166 is biased toward the joint feature 156 and thus the joint body 152 via a biasing mechanism 167 (depicted by dashed lines in **FIG. 10**) such as, for example, a spring, a material providing a biasing forces (e.g., spring steel, elastomers, polymers, etc.), or the like. Examples of springs that may be used include, but are not limited to, leaf springs, flat springs, compression springs, extension springs, coil springs, torsion springs, constant force springs, spring rings, tapered springs, wire form springs, garter springs, magazine springs, cantilever springs, Belleville washers, combinations thereof, or similar types of springs.

In the shown embodiment, the tube 166 has an outer shape that is configured to substantially match or correspond to the shape of the four apertures such that the tube may slide into any one of the four apertures and engage a portion of the joint body 152, locking, securing, and/or holding the handle body 154 in the respective position. In operation, a user can slide the tube 166 along the handle body 154 away from and out of the aperture (e.g., first aperture 170 shown in **FIG. 10**), move the handle from the first position shown by **FIG. 9** to the second position shown by **FIG. 10**, and then either release the tube 166, locking the handle body 154 into the second position via the tube biasing toward and engaging the joint body 152 about the second aperture 172, or continue to move the handle body 154 further into either the third position shown in **FIG. 11** or the fourth position (the position in a 180 degree orientation from the third position). Once in one of these positions, the tube 166 may be released, locking the handle body 154 into one of these positions via the tube 166 biasing toward and engaging the joint body 152 about the respective aperture. It is understood that other joints, locking mechanisms and/or methods may be included and/or used to permit the handle body 154 to rotate and/or pivot about one or more axes and then lock into one or more positions such as, for example, ball joints, screw tightener locks, etc. In other words, when the tube 166 is pulled back against the force of the biasing mechanism, the handle body 154 may be moved to any one of the four positions. When the handle body 154 is in one of the four positions, the tube 166 may be released such that the biasing mechanism slides the tube 166 toward and into one of the four apertures, locking, securing, and/or holding the handle body 154 into the respective position.

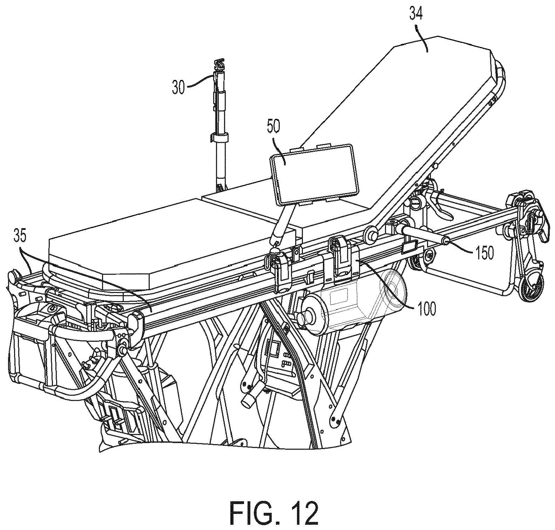

As thus discussed above, the accessory clamp 1 according to the various embodiments may be used to attach various accessories to a member of an emergency transport which has a complimentary shape to the receiving area 16 (FIG. 1), such as for example, as provided by at least the side frame rail 35 (FIG. 3A). In this manner, for example, as depicted by **FIG. 12** and as thus so far described, the emergency cot 34 may have conveniently and removably attached to respective side frame rails 35 thereon via the associated clamp, the IV pole assembly of **FIG. 4**, the tablet holder assembly of **FIG. 5**, the gas tank holder assembly of **FIG. 7**, and the handle assembly of **FIG. 11**, all attached thereon according to an embodiment disclosed thereby.
It is to be appreciated that still other embodiments, with still other accessories may be provided and attached in a similar manner as is further discussed hereinafter.

Referring to **FIGS. 13-17**, a lateral extension assembly 200 is shown. The lateral extension assembly 200 includes the clamp 1 and a lateral extension 202 provided with a connection end 201 that is fixedly and/or removably connected to the clamp 1 within the attachment space 28. As the clamp 1 may be according to any of the embodiments described above in the previous sections made in reference to **FIGS. 1-4**, for purposes of brevity no further discussion is provided thereon. Additionally, as the manner in which the connection end 201 is retained (releasably or fixed) in the attachment space 28 is the same as either blank 31 (FIG. 2) or connection end 29 (FIG. 4A-4C) and thus may be according to any of the embodiments described above in the previous sections made in reference to **FIGS. 1-4**, for purposes of brevity no further discussion is provided thereon.

The lateral extension 202 extends laterally from the connection end 201 outwardly over the middle body portion 26 of the clamp 1. The lateral extension 202 may include a hook 204 positioned at an end of the extension adjacent the inner body portion 25 of the clamp 1 and a stretcher edge holder 206 at an end of the extension opposite the hook 204. In this illustrated embodiment, the stretcher edge holder 206 includes a cam surface 208 that is configured to engage an edge of a component or device, for example, an outer frame edge 63a of a stretcher 67, wherein the hook 204 engages an inner frame edge 63b of the stretcher 67. The stretcher edge holder 206 is movably or pivotally connected to the lateral extension 202 and is connected to a lever 210 such that when the lever 210 is rotated, it rotates the stretcher edge holder 206 and the corresponding cam surface 208, thereby moving the cam surface 208 either closer or further relatively to the hook 204. In one embodiment, the lever 210 and stretcher edge holder 206 is rotatable between at least two positions: an unlock position shown in **FIG. 14** which positions the cam surface 208 furthest from the hook 204, and a lock position shown in **FIG. 15** which positions and secures releasably the cam surface 208 in a position that is closer to hook 204 then when in the unlocked position. In this manner, the lateral extension assembly 200 is configured to engage, hold and/or secure both the outer and inner frame edges 63a, 63b of the stretcher 67 via the clamping engagement thus provided between the hook 204 and the cam surface 208, and thus ultimately and conveniently fastening the stretcher 63 to a cot 34 via the clamp 1.

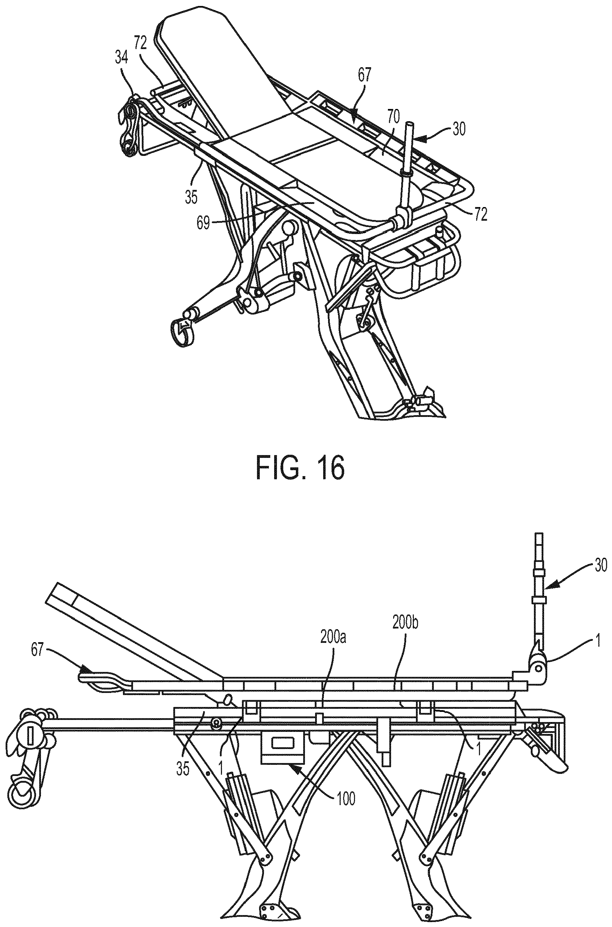

In one example of use as shown in **FIGS. 16** and **17**, a first lateral extension assembly 200a is clamped onto a first side frame rail 35 of the emergency cot 34, and a second lateral extension assembly 200b is clamped onto the same side frame rail 35 of the emergency cot 34, spaced apart from the first lateral extension assembly 200a. The same is repeated on the second side of the cot 34, in which a third lateral extension assembly and a fourth lateral extension assembly (both identical to lateral extension assemblies 200a, 200b) are clamped onto the second side frame rail (identical to the shown side frame rail 35) of the emergency cot 34 spaced apart from each other as depicted in the shown side. In the illustrated embodiment, the stretcher 67 is a scoop stretcher or break apart stretcher, wherein a respective side panels 69, 70 of the stretcher 67 are then positioned upon and/or connected to their respective pair of lateral extension assemblies 200a, 200b, thus providing additional support for the scoop stretcher or break apart stretcher when placed upon the emergency cot as well as connection points in which to secure the stretcher to the cot as shown in **FIGS. 16** and **17**.

In securing the stretcher 67 to the lateral extension assemblies, the inner frame edge 63b (**FIG. 14**) of each side panel 69, 70 of the stretcher 67 is slid into the respective hooks 204 and then outer frame edge 63a of each side panel 69, 70 of the stretcher 67 is then slid inside the respective stretcher edge holders 206, with the stretcher edge holders 206 in the unlock position. Once the stretcher 67 is engaged at least by each respective hook 204, each respective lever 210 is moved into the lock positions, thereby causing each respective cam surface 208 to engage at least a portion of the frame edge 63a of each respective side panel 69, 70 to hold, secure, and/or lock the scoop stretcher 67 onto the emergency cot. It is understood that the lateral extension assemblies could also not include the hook, stretcher edge holders, and cam surfaces and thus just provide a lateral extension surface to provide the cot with additional lateral support for supporting wider beds, platforms, and/or surfaces for supporting wider patients, equipment, and/or the like. It is also understood that the lateral extension assemblies may include other types of flanges, hooks, and/or engagement mechanisms to engage and/or secure platforms, stretchers, litters, and/or other equipment onto the cot. Additionally, as depicted in the illustrated embodiment of **FIG. 16**, an accessory bar 72 can be provided at each end of the cot 34 that connects between the respective connecting ends of two side panels 69, 70 of the stretcher 67. The accessory bar 72 includes complimentary connecting elements to the conventional connecting ends of the side panels 69, 70 as well as a cross-section profile that is similar to the side frame rail 35, such that the clamp 1 may be attached thereto, e.g., of the IV pole assembly 30 as depicted according to an embodiment, thereby providing a secondary rail to which additional accessories, such as disclosed herein, may be conveniently attached via clamp 1. Furthermore, it is to be appreciated that still other clamps may be further provided attached to the rail 35 of the cot 34 in still other embodiments along with the lateral extension assemblies 200a, 200b. For example, as depicted by FIG. 17, a gas tank holder assembly 100 can be attached to the side frame rail 35 due to the space left on the rail by the assemblies 200a, 200b.

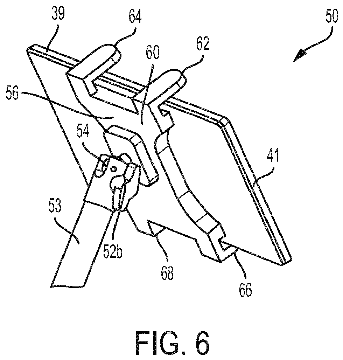

Referring to **FIGS. 18-19**, a platform (table) assembly 250 is shown. The platform assembly 250 includes the clamp 1, a rod 252 fixedly or removably connected to the clamp 1 via a connection end 251, and a raised platform 254 connected to a distal end of the rod 252, opposite the clamp 1. As the clamp 1 may be according to any of the embodiments described above in the previous sections made in reference to **FIGS. 1-4**, for purposes of brevity no further discussion is provided thereon. Additionally, as the manner in which the connection end 251 is retained (releasably or fixed) in the attachment space 28 is the same as blank 31 or connection end 29, and thus may be according to any of the embodiments described above in the previous sections made in reference to **FIGS. 1-4**, for purposes of brevity no further discussion is provided thereon. Furthermore, the connections between the rod 252 and the connection end 251, via an integral mounting bracket portion 253 thereof, and between the rod 252 and the raised platform 254 may be fixed connections as depicted, i.e., non-movable, or they may be movable connections, i.e., single axis or multi-axis joints in the same manner as described above previously with reference to the tablet holder assembly 50 in **FIGS. 5** and **6**, via the ball joints 51, 54 and adjusters 52. The clamp 1 may be clamped and/or connected to a member such as, for example, a side frame rail 35 of an emergency cot 34 as shown in **FIGS. 19**, **23** and **29**.

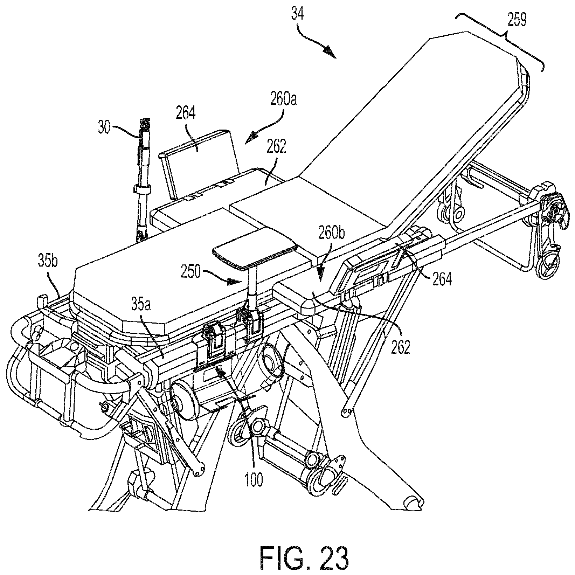

Referring to **FIGS. 20-23**, a supplemental cot base assembly 260 is shown. The cot base assembly 260 includes an expansion base panel 262 that provides additional/supplemental surface area space to a patient support surface 259 provided by the cot 34 (**FIG. 23**), which may be need in instances when transporting bariatric patients on the cot 34. Although the expansion base panel 262 is depicted as being rectangular in shape, other shapes such as, and not limited thereto, semi-circular, oblong, oval, ellispe, combinations thereof, etc., may also be provided. The cot base assembly 260 also includes one or more clamps 1 fixedly or removably connected to an underside of the base panel 262 via an integral connection end 261. As the clamp 1 may be according to any of the embodiments described above in the previous sections made in reference to **FIGS. 1-4**, for purposes of brevity no further discussion is provided thereon. Additionally, as the manner in which the connection end 261 is retained (releasably or fixed) in the attachment space 28 is the same as blank 31 or connection end 29, and thus may be according to any of the embodiments described above in the previous sections made in reference to **FIGS. 1-4**, for purposes of brevity no further discussion is provided thereon.

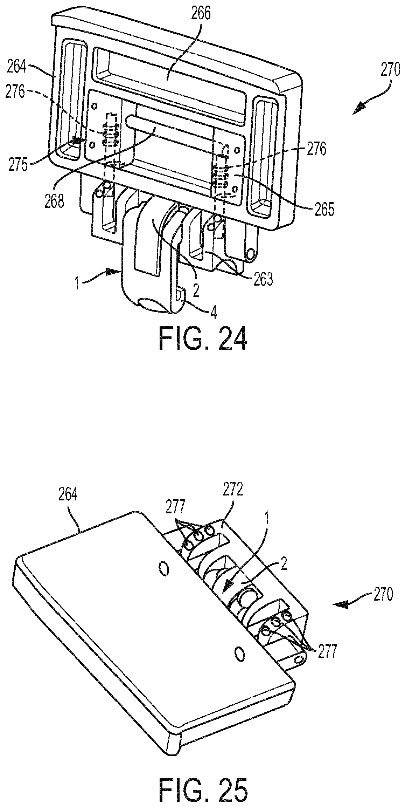

The cot base assembly 260 may further include a side panel 264 that is movably connected to the base panel 262 such that it rotates about a peripheral side edge 263 of the base panel 262. As shown in **FIG. 20**, the side panel 264 can be rotated into a first vertical (up) position (about 90 degrees relative to the base panel 262). As shown in **FIG. 21**, the side panel 264 can be rotated to a second vertical (down) position (about -90 degrees relative to the base panel 262). As shown in **FIG. 22**, the side panel 264 can be rotated to an angled position (some angle between 0 degrees and 90 degrees) such as, for example, 60 degrees, 45 degrees, 30 degrees, etc. In one embodiment, the side panel 264 may include a frame 265 and a panel body 266 connected to the frame. In other embodiments, the side panel 264 may be an integral piece fabricated using molding, machining, or other methods from one or more materials, including metal, plastics, composites, or any combinations thereof. As also shown in **FIG. 22**, a side panel release handle 268 is located on a back surface of the side panel 264, which is used such that the side panel may be released and transitioned between the above noted positions. The manner of operation of the release handle 268 is the same as the release handle depicted in **FIG. 24**, which is discussed in a later section hereafter. **FIG. 23** shows an example of two cot base assemblies 260a and 260b clamped and/or connected to opposite side frame rails 35a and 35b of an illustrative emergency cot 34, respectively, via respective clamps 1 (**FIG. 22**). In this example, the cot base assembly 260 provides additional width to an existing emergency cot and provides opposed side panels 264 as well, and enough space remaining on the respective side frame rails 35a, 35b to further attach via other clamps 1, the IV pole assembly 30, the gas tank holder assembly 100, and the platform assembly 250. In other embodiments, the cot base assembly 260 may include a side panel 264 that is fixedly connected to the base panel 262 in a fixed angular orientation such as, for example, fixed at 60 degrees. In yet other embodiments, the cot base assembly 260 may not include a side panel 264 at all.

Referring to **FIGS. 24-29**, a cot side panel assembly 270 is shown. The cot side panel assembly 270 includes the clamp 1 having integral to the main body 2 a side panel portion 272.
As the clamp 1 may be according to any of the embodiments described above in the previous sections made in reference to **FIGS. 1-4**, for purposes of brevity no further discussion is provided thereon. Additionally, in other embodiments, the side panel portion 272 may be provided with the connection end 261 (**FIG. 20**), and thus as the manner of how such is retained (releasably or fixed) in the attachment space 28 is the same as blank 31 or connection end 29, such connection and operation thereof thus may be according to any of the embodiments described above in the previous sections made in reference to **FIGS. 1-4**, and for purposes of brevity no further discussion is provided thereon.

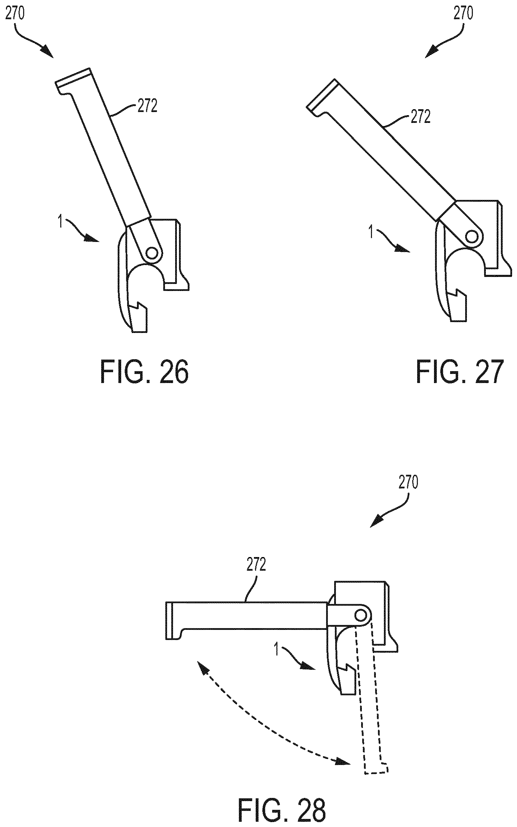

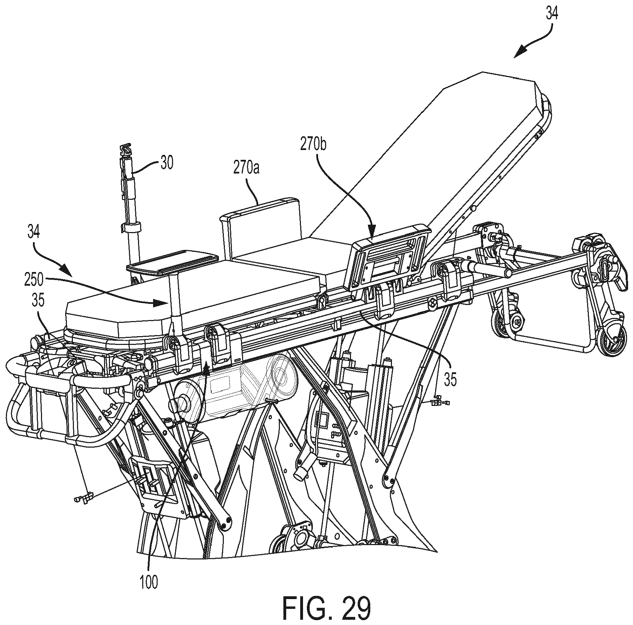

In the illustrated embodiment, the side panel portion 272 is a basically a smaller version of the base panel 262 in the embodiment above, in that only one clamp 1 is needed to attach the attached side panel 264 to the side frame rail 35, and that side panel 264 can rotated relative to side edge as described above in the previous embodiment. The side panel 264 is also provided with a securing mechanism 275 that include the release handle 268 which when manipulated releases the side panel 264 from an engagement in a respective of a plurality of catches 277 provided in the side panel portion 272. The catches 277 are so arranged in the side panel portion 272 to provide the above noted positions all except the vertical down position. The handle 268 is spring biased, via one or more springs 276 of the securing mechanism that are housed internally in the frame 265, and the handle itself has or is linked to one or more pins 278 that are normally seated under tension from the one or more springs 276 in one of the catches 277 when so positioned. In this manner, the side panel 264 may move over or pivot above the body 2 of the clamp 1 such that it may move between at least two positions of orientation: 1) vertical up position (in line with the longitudinal axis of the clamp 1) as shown in **FIGS. 24**; and 2) a horizontal position which is about 90 degrees to the longitudinal axis of the clamp 1 as shown in **FIGS. 25** and **28**; and in other embodiments, 3) any angular position therebetween as shown in **FIGS. 26**, **27**, and **28** as defined by the relative positioning of catches 277, as well as a vertical down position as depicted in **FIG. 28** via dashed lines. In this manner, for example, as depicted by **FIG. 29** and as thus so far described, the emergency cot 34 may have conveniently and removably attached to respective side frame rails 35 thereon via the associated clamp 1, the IV pole assembly 30 of **FIG. 4**, the gas tank holder assembly 100 of **FIG. 7**, the platform assembly 250 of **FIG. 18**, and the cot side panel assembly 270 of **FIG. 24**, all attached thereon according to an embodiment disclosed thereby.

Referring now to **FIGS. 30-32**, a side arm assembly 280 is shown. The side arm assembly 280 includes spaced apart, first and second clamps 1 fixedly or removably connected to a folding side arm 288 via integral first and second connection ends 290, 292. As the clamp 1 may be according to any of the embodiments described above in the previous sections made in reference to **FIGS. 1-4**, for purposes of brevity no further discussion is provided thereon. Additionally, as the manner in which the connection ends 290, 292 are each retained (releasably or fixed) in the attachment space 28 is the same as blank 31 or connection end 29, and thus may be according to any of the embodiments described above in the previous sections made in reference to **FIGS. 1-4**, for purposes of brevity no further discussion is provided thereon.

In the illustrated embodiment, the clamps 1 may be connected to each other using a strut 282. The strut 282 may be a rod, longitudinal structural member, or any bracing type member. The strut 282 may hold the clamps in a spaced arrangement that is substantially fixed and provide some structural support to the side arm assembly 280. The side arm assembly 280 may include a first support 284 movably connected to one of the clamps 1 and a second support 286 movably connected to a second one of the clamps 1 via respective ones of the first and second connection ends 290 and 292, acting as first and second side arm pivot joints, respectively. The folding side arm 288 is also movably connected to an end of the first support 284 and an end of the second support 286, opposite the connection ends 290 and 292 via respective third and fourth side arm pivot joints 294 and 296. The four joints may be single axis movement joints allowing the first and second support 284 and 286, respectively, to rotate or pivot in both directions as indicated by arrows E and F as shown in **FIG. 31**, or multi-axis movement joints such as, for example, a ball joint. The side arm assembly 280 may move to a store position as shown in **FIG. 31**, wherein the arm 288 is in a position that is closer to the side frame rail 35 of the cot 34. As shown in **FIG. 30**, the arm 288 may be moved to a support position and, optionally be locked into this support position. **FIG. 32** shows a first side arm assembly 280a in a store position and a second side arm assembly 280b in a support position. Threaded locks, friction locks, screw tightening locks, or the like disposed on one or more of the joints may be used to lock the arm 288 in the support position. In other embodiments, the arm 288 may be locked in one or more positions using any variety of conventional or yet-to-be developed locking mechanisms.

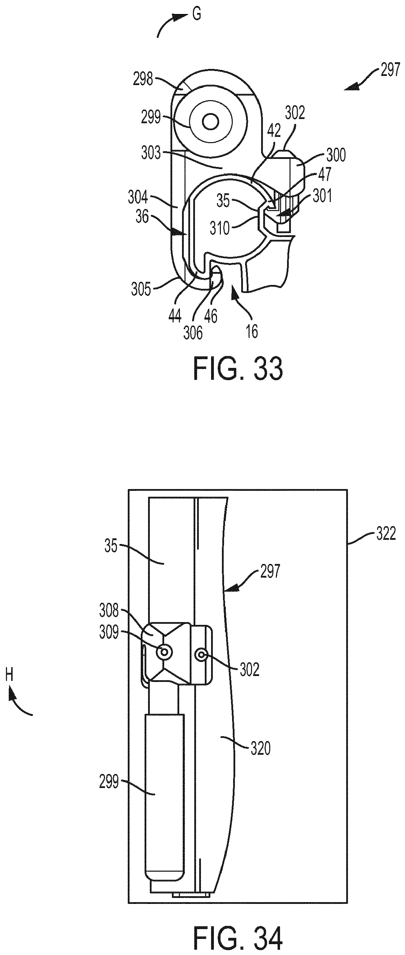

Turning finally to **FIGS. 33-34**, illustrating end and top views thereof respectively, a screw clamp assembly 297 is shown coupled to the side frame rail 35 of **FIG. 33**. In the illustrated embodiment the screw clamp assembly 297 is a simplified version to previous embodiments, in which provided is a main body 298, a handle 299, a screw clamp portion 300 comprising a clamp 301 and a screw 302 that can extend partly or completely through the screw clamp portion 300, and a bottom hook portion 306. The screw clamp assembly 297 can couple to the side frame rail 35 of **FIG. 33** via clamp 301 lifting to engage under upper lip 47 of the side frame rail.

As with the various other embodiments of the clamp 1, the main body 298 provides the receiving area 16 that is complimentary in shape to respective parts to those of the side frame rail 35, including an upper portion 303, a linear portion 304 and a lower surface 305 of the bottom hook portion 306. In some embodiments the screw clamp assembly 297 can be placed on the side frame rail 35 such that the bottom hook portion 306 couples to the lip 46 of the side frame rail 35, and the screw clamp assembly 297 can be rotated in direction G to couple the screw clamp portion 300 to the side frame rail 35. More specifically regarding the mechanism of coupling, the opposing wall 310 to the linear portion 36 of the side frame rail 35 is extended inward and the upper portion of the opposing wall 310 provides the upper lip 47 extending out therefrom and to which screw clamp portion 300 of the screw clamp assembly 297 can be coupled. Next, the screw 302 of the screw clamp portion 300 can be tightened down, thus pulling the clamp 301 upward so as to lock under and against the upper lip 47 of the side frame rail 35. Understandably, the clamp 301 may be placed against the edge 307 of the side frame rail 35 and the screw clamp assembly 297 is rotated opposite to direction G until the bottom hook portion 306 couples to the lip 46 of the side frame rail 35, and the tightened down via screw 302 as mentioned above.

Referring to **FIG. 34**, showing the top view of the screw clamp assembly 297, the handle 299 can be moved about a pivot point 309 within a base 308, and can be moved in direction H approximately up to 90 degrees from the current position to a deployed position, and vice versa back to the shown stowed position. In some embodiments the handle can be locked in place by a screw, a pin, or other mechanism known in the art, and can be returned to the position shown in **FIG. 34** upon release. In some embodiments the base 308 can have a spring or springs pulling the handle toward the base and / or toward locking positions. In some embodiments the spring or springs extend from the base and into the handle. In some embodiments the handle 299 is in part or fully held in place by a screw, nail, pin, or other mechanism known in the art, about pivot point 309. Additionally, in some embodiments the side frame rail 35 may be integral with a structural member 320, which forms part of an emergency cot 34 (FIG. 3), and/or an emergency vehicle, e.g., a wall structure thereof, an emergency litter, a shelving, or a rack, all generally indicated by reference symbol 322.

It should now be understood that the accessory clamp described herein may be provided to fixedly or removably attach to a variety of structural members or member portions provided by e.g., emergency cots, emergency vehicles, and associated emergency equipment, for the improved use of a variety of accessories that may be conveniently attached thereto.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

Alternative expressions of the inventive concept are set out in the following clauses:
1. An accessory clamp for receiving and engaging a portion of a structural member comprising:
   a main body optionally providing a hook;
   a handle pivotally connected to the main body at a pivot point;
   the handle comprising a distal portion that is distal from the pivot point, the distal portion including a distal inner portion comprising a cam surface that extends outwardly from the distal inner portion;
   wherein:
      when the handle is rotated down into a locked position, the main body and the handle form a receiving area therewithin configured to receive and engage the portion of the structural member, and
      in the receiving area, the main body comprises a receiving surface and a side surface that are each configured to receive and engage the portion of the structural member; and
   wherein the structural member comprises at least a part of an emergency cot, an emergency vehicle, a wall structure, an emergency litter, an accessory bar, a shelving, or a rack.
2. The accessory clamp of clause 1, wherein the main body defines an attachment space configured to receive an connection end of an accessory, wherein handle provides a nose section, and the clamp further comprises a pin coupled to the handle and which extends into the attachment space when the handle is in the locked position to releasable hold the connection end of the accessory, and which retracts into the main body when the handle is in an unlocked position to release the connection end of the accessory.
3. The accessory clamp of clause 1, wherein the main body defines an attachment space configured to receive an connection end of an accessory, wherein the clamp further comprises a fixed pin that spans perpendicularly across the attachment space, and wherein the connection end of the accessory provides a key-hole slot which engages the pin in one direction to be releasably held thereby.
4. The accessory clamp of clause 1, wherein handle defines a cam channel, and the clamp further comprises a tensioning arm providing the side surface and having a cam follower moveable accommodate in the cam channel such that when the handle is rotated down, the side surface engages the portion of the structural member under tension.
5. The accessory clamp according to clause 2 or 3, wherein the accessory is selected from an IV pole, a tablet holder, a gas tank holder, a handle, a lateral extension providing a stretcher edge holder, a raised platform, an expansion base panel, a side panel, and a folding side arm.
6. The accessory clamp according to any one of clauses 1-4, wherein the clamp forms part of an IV pole assembly and is configured to couple a connection end of an intravenous (IV) pole of the IV pole assembly within an attachment space of a main body of the clamp, wherein said IV pole when coupled to the clamp via the connection end, is positionable in an upright vertical position and a folded down position.
7. The accessory clamp according to any one of clauses 1-4, wherein the clamp forms part of a tablet holder assembly which releasable holds a tablet, and said clamp is configured to couple to a holder body of the tablet holder assembly, said holder body having at least one extension extending from the body, the at least one extension comprising at least one protrusion extending inwardly from an inner surface of the at least one or more of the extension such that the protrusion snaps over the front surface of the tablet, holding the tablet onto the tablet holder.
8. The accessory clamp according to any one of clauses 1-4, wherein the clamp forms part of a gas tank holder assembly which releasable holds a gas tank, and said clamp is configured to couple to a gas tank holder of the gas tank holder assembly, the gas tank holder body additionally comprising a cradle portion configured to cradle a gas tank.
9. The accessory clamp according to any one of clauses 1-4, wherein the clamp forms part of a handle assembly and is configured to movably couple a handle body which permits the handle body to move relative to the main body about one or more axes.
10. The accessory clamp according to any one of clauses 1-4, wherein the member is a side frame rail of an emergency cot, and the clamp is configured to couple to at least one lateral extension for holding a scoop stretcher, the lateral extension extending laterally from an upper portion of the clamp and away from the emergency cot, wherein the lateral extension provides a hook and a stretcher edge holder which are configured to releasably hold the scoop stretcher therebetween.
11. The accessory clamp according to any one of clauses 1-4, wherein the clamp is configured to couple to a side panel that is moveable about the clamp such that it may move between at least two positions of orientation.
12. The accessory clamp of clause 11, wherein the side panel is couple to expansion base panel which couples directly to the clamp.
13. The accessory clamp according to any one of clauses 1-4, wherein the clamp is configured to couple to a removable side arm of an emergency cot, and wherein:
   the clamp is provided in pairs comprising a first clamp and a second clamp, the clamps spaced a distance apart and coupled to each other via a strut;
   the strut holding the clamps in a spaced arrangement that is substantially fixed; and
   each of the clamps being coupled to the removable side arm via a first support and a second support coupled respectively to the first clamp and the second clamp via a first support joint and a second support joint, respectively, the support joints allowing movement of the supports such that the removable side arm can be moved relative to the clamps.
14. An accessory clamp for receiving and engaging a portion of a structural member comprising:
   a main body having a receiving area therewithin configured to receive and engage the portion of the structural member, a bottom hook portion, and a screw clamp portion; and
   a handle pivotally connected to the main body at a pivot point;
   wherein:
      the structural member provides a bottom lip and an upper lip,
      the bottom hook portion engages the bottom lip;
      the screw clamp portion comprises a clamp and a screw that extends through the screw clamp portion which lifts the clamp to engage under the upper lip of the side frame rail, and
      in the receiving area, the main body comprises a receiving surface and a side surface that are each configured to receive and engage the portion of the structural member; and
   wherein the structural member comprises at least a part of an emergency cot, an emergency vehicle, a wall structure, an emergency litter, an accessory bar, a shelving, or a rack.
15. A method of using an accessory clamp for receiving and engaging a portion of a member comprising:
   providing an accessory clamp for receiving and engaging the portion of a member comprising:
      a main body;
      a handle pivotally connected to the main body at a pivot point;
      the handle comprising a distal portion that is distal from the pivot point, the distal portion including a distal inner portion comprising a cam surface that extends outwardly from the distal inner portion;
      wherein:
         when the handle is rotated down into a locked position, the main body and the handle form a receiving area therewithin configured to receive and engage the portion of a member; and
         in the receiving area, the main body comprises a receiving surface and a side surface that are each configured to receive and engage the portion of the member; and
      engaging the portion of the member by rotating the handle down into the locked position.

## Claims

1. An accessory clamp for receiving and engaging a portion of a structural member of an emergency cot, the accessory clamp comprising:
a main body;
a handle pivotally connected to the main body at a pivot point;
the handle comprising a distal portion that is distal from the pivot point and is rotatable relative to the main body about the pivot point, the distal portion including a distal inner portion;
wherein:
when the handle is rotated into a locked position, the main body and the handle form a receiving area therewithin configured to receive and engage the portion of the structural member, and
in the receiving area, the main body comprises a receiving surface and a side surface that are each configured to receive and engage the portion of the structural member.

2. The accessory clamp of claim 1, wherein the main body defines an attachment space configured to receive a connection end of an accessory, wherein the clamp further comprises a pin that spans perpendicularly across the attachment space, and wherein the connection end of the accessory provides a key-hole slot which engages the pin in one direction to be releasably held thereby.

3. The accessory clamp according to claim 1, wherein the clamp forms part of an intravenous (IV) pole assembly and is configured to couple a connection end of an IV pole of the IV pole assembly within an attachment space of the main body, wherein said IV pole when coupled to the clamp via the connection end, is alternately positionable in an upright vertical position and a folded down position.

4. The accessory clamp of claim 1, wherein the pivot point is movable such that when the handle is rotated into a locking position, the movable pivot point translates between a first position and a second position.

5. The accessory clamp of claim 4, wherein when the handle is rotated into an unlocked position, the clamp is placed in an open position.

6. The accessory clamp of claim 1, wherein the main body further comprises an attachment space configured to receive a connection end of an accessory, wherein handle provides a nose section, and the clamp further comprises a pin coupled to the handle and which extends into the attachment space when the handle is in the locked position to releasably hold the connection end of the accessory, and which retracts into the main body when the handle is in an unlocked position to release the connection end of the accessory.

7. The accessory clamp of claim 1, wherein the main body further comprises a hook secured thereto.

8. The accessory clamp of claim 1, wherein the distal inner portion comprises a cam surface that extends into the receiving area when the handle is rotated into a locking position.

9. The accessory clamp of claim 1, wherein the handle defines a cam channel, and the clamp further comprises a tensioning arm providing the side surface and having a cam follower moveably accommodated in the cam channel such that when the handle is rotated down, the side surface engages the portion of the structural member under tension.

10. The accessory clamp of claim 9, wherein the pivot point is fixed such that when the handle is rotated into a locking position, the movement of the handle involves no translation thereof.
